Europäisches Patentamt

European Patent Office

Office européen des brevets

(19)

(11) **EP 0 880 989 B1**

(12) **FASCICULE DE BREVET EUROPEEN**

(45) Date de publication et mention
de la délivrance du brevet:
**17.12.2003 Bulletin 2003/51**

(51) Int Cl.⁷: **B01D 53/02**, B01D 53/04

(21) Numéro de dépôt: **98401598.2**

(22) Date de dépôt: **26.06.1998**

(54) **Procédé de séparation d'un flux gazeux par un procédé PSA**

Verfahren zur Trennung von einer Gasströmung mittels Druckwechseladsorption

Process for the separation of a gas stream with pressure swing adsorption

(84) Etats contractants désignés:
**DE ES FR IT NL**

(30) Priorité: **07.07.1997 FR 9708590**

(43) Date de publication de la demande:
**02.12.1998 Bulletin 1998/49**

(73) Titulaire: **L'air Liquide, S.A. à Directoire et Conseil
de Surveillance pour l'Etude et l'Exploitation des
Procédés Georges Claude
75321 Paris Cedex 07 (FR)**

(72) Inventeurs:
• **Labasque, Jacques
78000 Versailles (FR)**
• **Moreau, Serge
78140 Velizy-Villacoublay (FR)**
• **Marot, Christine
78530 Buc (FR)**

(74) Mandataire: **Pittis, Olivier et al
L'Air Liquide, S.A.,
Direction de la Propriété Intellectuelle,
75, Quai d'Orsay
75321 Paris Cedex 07 (FR)**

(56) Documents cités:
**EP-A- 0 067 404        US-A- 4 194 892
US-A- 5 174 979**

## Description

L'invention concerne un procédé PSA de séparation d'un flux gazeux d'alimentation, par exemple un flux d'air, contenant au moins un premier composant, par exemple de l'azote, et un second composant, par exemple de l'oxygène, par adsorption préférentielle dudit premier composant, par exemple l'azote, sur des particules d'un matériau adsorbant préférentiellement le premier composant et récupération d'un flux gazeux enrichi en ledit second composant, par exemple un flux enrichi en oxygène, c'est-à-dire appauvri en azote.

L'oxygène est un gaz présentant un grand intérêt sur le plan industriel car trouvant de multiples applications dans de nombreux domaines techniques, par exemple, dans la fabrication de l'acier, du verre ou du papier, la médecine, la soudure de métaux, la combustion ou la dépollution.

Une des techniques actuellement utilisées pour produire de l'oxygène est la technique dite "PSA" (Pressure Swing Adsorption); on entend par procédés PSA, non seulement les procédés PSA proprement-dits, mais aussi les procédés analogues, tels les procédés VSA (Vacuum Swing Adsorption) ou MPSA (Mixed Pressure Swing Adsorption).

En effet, il est d'usage de séparer l'oxygène d'un mélange gazeux comprenant essentiellement de l'oxygène et de l'azote, tel l'air, grâce à une adsorption de l'azote sur un matériau adsorbant préférentiellement l'azote, ladite adsorption de l'azote étant effectuée par variation de la pression appliquée dans la zone de séparation contenant ledit matériau adsorbant; l'oxygène ne s'adsorbant pas ou peu sera récupéré en sortie de ladite zone de séparation. De tels procédés PSA sont classiquement décrits dans l'art antérieur.

De façon schématique, un procédé PSA de séparation de l'oxygène d'un mélange gazeux contenant essentiellement de l'oxygène et de l'azote, tel l'air, comprend toujours:

- une étape d'adsorption sélective de l'azote sur un matériau adsorbant et à une pression d'adsorption dite "pression haute";
- une étape de désorption de l'azote piégé par l'adsorbant, à une pression de désorption, dite "pression basse", inférieure à la pression d'adsorption;
- une étape de repressurisation de la zone de séparation comprenant l'adsorbant, de la pression basse à la pression haute;

l'oxygène ou un gaz enrichi en oxygène étant récupéré durant la phase d'adsorption de l'azote.

L'efficacité de séparation du mélange gazeux, et donc de récupération de l'oxygène, dépend de nombreux paramètres, à savoir, notamment de la pression haute, de la pression basse, du type de matériau adsorbant et de son affinité pour les composés à séparer, de la composition du mélange gazeux à séparer, de la température dudit mélange à séparer, de la granulométrie, c'est-à-dire de la taille et de la forme des particules d'adsorbant utilisées, de la composition de ces billes, du gradient de température s'établissant à l'intérieur du lit d'adsorbant, la géométrie des adsorbeurs...

A ce jour, aucune loi de comportement générale n'a pu être déterminée et jusqu'à présent, les publications que l'on peut trouver dans l'art antérieur ne portent, en général, que sur l'un des ces paramètres, par exemple le type d'adsorbant mis en oeuvre dans le procédé de séparation, les pressions d'adsorption et de désorption, la température de l'air à séparer...

Certains documents traitent néanmoins plus spécifiquement de la granulométrie, c'est-à-dire de la taille moyenne et de la forme des particules d'adsorbant, en général des "billes" de zéolites, mises en oeuvre dans le procédé PSA.

En effet, il est connu que la granulométrie des particules joue un rôle sur l'efficacité de la séparation des constituants d'un mélange gazeux, telle la séparation des constituants azote et oxygène de l'air

Ainsi, les billes d'adsorbant de faible diamètre ou "petites billes", par exemple des billes de zéolite de moins de 2.5 mm de diamètre, sont plus performantes que les billes de tailles supérieures car elles permettent de diminuer le temps de cycle du procédé PSA et, par là-même, de produire plus d'oxygène pendant un temps donné. Toutefois, les petites billes présentent plusieurs inconvénients tendant à nuire au bon fonctionnement du procédé PSA. En particulier, elles engendrent des pertes de charges plus élevées au sein du lit d'adsorbant et, de par leur faible diamètre, elles sont susceptibles de passer facilement à travers les grilles des adsorbeurs destinées à les retenir.

A l'inverse, bien que les grosses billes engendrent peu de pertes de charges au sein du lit d'adsorbant, passent moins facilement à travers les grilles des adsorbeurs et présentent une résistance plus élevée, notamment, à l'écrasement, leur utilisation dans les procédés PSA conduit généralement à une séparation moins efficace et rarement optimale des constituants du mélange gazeux à séparer.

Il existe, dans l'art antérieur, des documents décrivant des gammes de tailles de billes de zéolite, c'est-à-dire des plages de granulométrie moyenne des particules d'adsorbant, en général, inférieure à 5 mm.

Ainsi, les documents EP-A-8619, US-A-4,194,892 et EP-A-0488926 décrivent des procédés de type RPSA (pour Rapid Pressure Swing Adsorption en anglais) mettant en oeuvre des billes dont la taille est comprise, respectivement, entre 0.125 mm et 0.84 mm, entre 0.12 à 0.85 mm et entre 0.05 à 0.20 mm. Il faut néanmoins préciser que les procédés RPSA fonctionnement à l'inverse des procédés PSA, c'est-à-dire que dans un procédé RPSA, on cherche à établir une perte de charge importante.

En outre, les documents US-A-5,174,979 et US-A-4,544,378 décrivent des procédés de séparation de gaz mettant en oeuvre des zéolites ayant une granulométrie moyenne comprise entre 8 et 12 mesh (soit de 1.65 à 2.36 mm).

Le document US-A-4,925,460 enseigne un procédé de séparation de gaz mettant en oeuvre des billes de zéolite ayant une taille d'au moins 0.12 mm.

De manière schématique, tous ces documents antérieurs s'attachent à décrire des plages de tailles moyennes de billes, c'est-à-dire des plages de granulométries moyennes susceptibles de convenir à la mise en oeuvre du procédé PSA.

Or, les inventeurs de la présente invention ont découvert que, s'il est effectivement nécessaire de tenir compte de la granulométrie moyenne (μ) des particules d'adsorbant, laquelle joue effectivement un rôle sur la compacité du lit de particules, il est également indispensable, pour obtenir une séparation efficace des constituants du mélange gazeux à séparer, de considérer aussi la largeur de la distribution granulométrique (σ) desdites particules d'adsorbant. Dans le cadre de la présente invention, la dimension caractéristique des particules d'adsorbant à considérer pour calculer les valeurs de μ et σ est le diamètre hydraulique desdites particules. Ainsi, pour des billes d'adsorbant, on considère leur diamètre et, dans le cas général, le diamètre hydraulique correspond à six fois le volume sur la surface.

Il a été mis en évidence que la largeur de la distribution granulométrique (σ) des particules a une influence contraire sur l'adsorption par unité de volume et sur la cinétique des particules d'adsorbant, d'une part, et sur les pertes de charges, d'autre part.

En effet, une augmentation de la largeur de la distribution granulométrique (σ) engendre:

- une augmentation de l'adsorption par unité de volume des particules, de par, notamment, un meilleur réarrangement des particules entre elles, et donc une diminution de la porosité du lit de billes d'adsorbant,
- une augmentation de la cinétique du tamis moléculaire,
- et une augmentation des pertes de charges.

De là, le but de l'invention est de proposer un procédé PSA amélioré par rapport aux procédés existants, c'est-à-dire un procédé PSA dans lequel l'influence de la largeur de la distribution granulométrique (σ) a été prise en compte afin d'optimiser l'efficacité de séparation des constituants gazeux, conduisant ainsi à une productivité et à un rendement accrus, donc à une dépense en énergie et en tamis moléculaire plus faible.

L'invention concerne alors un procédé de séparation d'un flux gazeux d'alimentation contenant au moins un premier composant et un second composant, par adsorption préférentielle dudit premier composant, à une pression haute d'adsorption, sur au moins un lit de particules d'un matériau adsorbant de granulométrie moyenne inférieure à 2,5 mm et récupération d'un flux gazeux enrichi en ledit second composant, et par désorption dudit premier composant à une pression basse de désorption, caractérisé en ce que le rapport (μ/σ) de la granulométrie moyenne μ des particules d'adsorbant contenues dans ledit lit sur la largeur de distribution granulométrique σ desdites particules est compris dans la plage 1.4 à 15, de préférence, le rapport μ/σ est compris dans la plage 3 à 10.

Selon le cas, le procédé de l'invention peut comprendre l'une ou plusieurs des caractéristiques suivantes :

- les particules de' matériau adsorbant sont des particules de zéolites échangées; l'épaisseur du lit de particules est comprise entre 0.1 à 3 m, de préférence, entre 0.2 et 2 m et, préférentiellement encore, entre 0.3 et 1.2 m.
- la pression haute d'adsorption est comprise dans la gamme $10^5$ Pa à $10^6$ Pa;
- la pression basse de désorption est comprise dans la gamme $10^4$ Pa à $10^5$ Pa;
- les particules de zéolites contiennent des cations choisis dans le groupe formé par le calcium, le lithium, le zinc, le strontium, le magnésium, le cuivre, l'aluminium, le nickel, le cobalt, le manganèse, le chrome, le baryum, le sodium, le scandium, le gallium, le fer, l'indium, l'yttrium, les lanthanides et leurs mélanges;
- le flux gazeux d'alimentation est à une température comprise entre 15°C et 55°C;
- le premier composant est de l'azote et/ou le second composant est de l'oxygène;
- le flux gazeux d'alimentation est de l'air.

L'invention va maintenant être décrite plus en détail, notamment à l'aide d'exemples donnés à titre illustratif, mais non limitatif, et en référence aux figures annexées.

La distribution granulométrique f des particules d'adsorbant est une fonction dépendant du diamètre hydraulique des particules et qui, par intégration entre un diamètre d1 et un diamètre d2 (avec d2≥d1) de particules, reflète la proportion massique p(d1, d2) de particules dont le diamètre est compris entre les valeurs d1 et d2. Ceci peut être exprimé par la formule (1) suivante :

$$p(d1, d2) = \int_{d1}^{d2} f(x).dx \qquad (1)$$

En outre, la granulométrie moyenne ($\mu$) et la largeur de la distribution granulométrique ($\sigma$) sont définies, respectivement, par les formules (2) et (3) suivantes :

$$\mu = \int_0^\infty x.f(x).dx \qquad (2)$$

$$\sigma^2 = \int_0^\infty (x-\mu)^2 . f(x).dx \qquad (3)$$

Afin d'étudier l'influence de la largeur de la distribution granulométrique ($\sigma$) sur la porosité ($\varepsilon$) du lit de particules d'adsorbant, on effectue un tamisage de particules d'adsorbant (ici des billes de zéolite) ayant une distribution granulométrique donnée.

Le tamisage est effectué en utilisant des tamis ayant des tailles de mailles différentes, à savoir : 1 mm, 1.25 mm, 1.4 mm, 1.6 mm et 1.8 mm, de sorte d'obtenir des échantillons de particules ayant des granulométrie distinctes, tant en granulométrie moyenne ($\mu$) et qu'en largeur de la distribution granulométrique ($\sigma$).

Les divers échantillons, encore appelés coupes granulométriques, obtenus sont ensuite mélangés 2 à 2, puis 3 à 3, de manière à obtenir davantage d'échantillons de combinaisons différentes en granulométrie moyenne et en largeur de la distribution granulométrique, c'est-à-dire ayant des valeurs différentes du rapport ($\mu/\sigma$).

On mesure ensuite la masse volumique de chaque échantillon de particules d'adsorbant et on détermine que les plus tassés d'entre-eux ont une porosité ($\varepsilon$) de 0.38; la porosité ($\varepsilon$) étant définie comme le rapport du volume du vide inter-particules au volume total.

Connaissant, par ailleurs, la granulométrie moyenne ($\mu$) et la largeur de la distribution granulométrique ($\sigma$) des différents échantillons, on détermine la relation existant entre la porosité ($\varepsilon$) et le rapport $\sigma/\mu$ (qui est l'inverse du rapport $\mu/\sigma$).

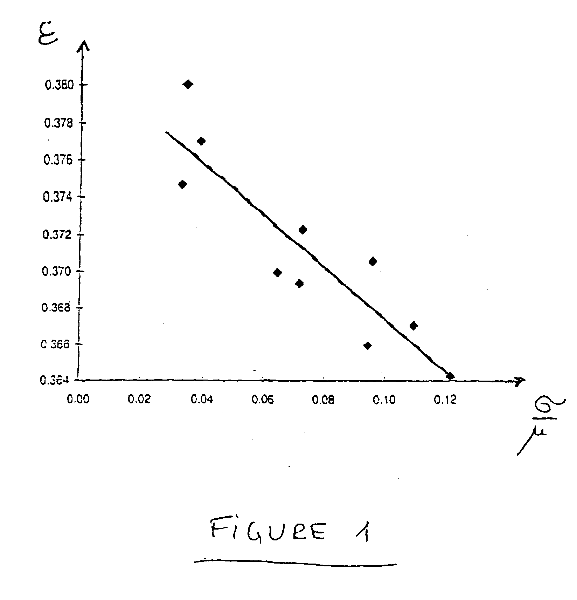

Les résultats obtenus sont représentés sur la Figure 1, où il apparaît que la porosité est une fonction affine du rapport ($\sigma/\mu$). Dans ce cas précis, la relation liant la porosité et le rapport ($\sigma/\mu$) est la suivante :

$$\varepsilon = -0.1418 . (\sigma/\mu) + 0.3815$$

De là, il ressort qu'une augmentation de la largeur de la distribution granulométrique ($\sigma$) implique une diminution de la porosité ($\varepsilon$) et donc une augmentation bénéfique de l'adsorption par unité de volume des particules.

A partir des résultats obtenus ci-avant, en particulier la largeur de la distribution granulométrique ($\sigma$) et la porosité ($\varepsilon$), on évalue les pertes de charges à l'aide de la formule d'Ergun donnée dans "Principles of Adsorption and Adsorption Processes", 1984, Ruthven, relation 7.3, d'où il apparaît qu'une augmentation de la largeur de la distribution granulométrique ($\sigma$) engendre une augmentation néfaste des pertes de charges.

En outre, afin d'étudier l'influence de la largeur de la distribution granulométrique sur la cinétique des particules d'adsorbant, on émet l'hypothèse qu'il existe, au sein du lit de particules d'adsorbant, un volume élémentaire représentatif suffisamment grand pour être représentatif de la distribution granulométrique au sein dudit lit et suffisamment petit pour réagir de manière autonome du point de vue de la cinétique d'adsorption.

Or, d'après le modèle cinétique de la Linear Driving Force défini par Ruthven, "Pressure Swing Adsorption", 1994, relation 5.15, une bille d'adsorbant répond avec un coefficient cinétique k, lequel est lié à la taille de ladite bille.

Donc, tout volume élémentaire représentatif doit répondre avec un coefficient cinétique propre égal à la moyenne des coefficients cinétiques des billes qui le composent.

De là, pour un lit de billes d'adsorbant de distribution granulométrique f et de cinétique intrinsèque k, le coefficient cinétique global (kg) est donné par la relation (4) suivante :

$$kg = \int_0^{\infty} k(x).f(x).dx \qquad (4)$$

avec $k(x) = k/x^2$ (5), où $k(x)$ est le coefficient cinétique d'une bille de diamètre x.

Il ressort des équations (4) et (5) que, à μ fixé, une augmentation de σ augmente, de manière positive, le coefficient cinétique, donc la cinétique des billes d'adsorbant.

**Exemple**

Afin de vérifier les observations précédentes, des essais de simulations ont été réalisés et sont donnés ci-après.

Les paramètres utilisés pour réaliser ces différentes simulations du procédé PSA sont les suivants :

- 3 zones d'adsorption distinctes fonctionnant en parallèle,
- durée totale du cycle de traitement : 3 x 30 sec ou 3 x 15 sec,
- mélange gazeux à séparer : air (avec assimilation de l'argon à l'oxygène),
- premier composant s'adsorbant préférentiellement: azote,
- second composant s'adsorbant : oxygène,
- épaisseur du lit d'adsorbant : 0.5 m ou 1 m,
- adsorbant : billes de zéolite,
- granulométrie moyenne : comprise entre 0.8 mm et 1.4 mm,
- largeur de distribution granulométrique inférieure ou égale à 0.3 mm,
- types de distribution granulométrique : uniforme ou gaussienne,
- pression d'adsorption : $1,1. 10^5$ Pa,
- pression de désorption : $0,27.10^5$ Pa,
- température du flux d'alimentation 20°C,
- pureté de l'oxygène produit : 90% ou 93 %.

Le programme utilisé pour la simulation des exemples suivants repose sur les principes de conservation de la masse, de conservation de l'enthalpie, de conservation de la quantité de mouvement et utilise le modèle de la Linear Driving Force pour l'évaluation de la cinétique des transferts solide-gaz au sein de la masse d'adsorbant. De tels modèles de simulation sont notamment décrits dans "Pressure Swing Adsorption", Ruthven, Farooq et Knaebel, VCH Publishers, 1994, pages 172-209; et dans "Fluid Flow Through Packed Columns", S. Ergun, Chem. Engr. Prog., 48 (2), 89(1952). La résolution des équations peut, quant à elle, être réalisée par exemple au moyen du programme DIVPAG de la Bibliothèque Mathématique IMSL (International Mathematical & Statistical Library commercialisé par la société MicrosoftTM; ou du programme ADSIM commercialisé par la société AspenTechTM. L'homme de l'art est parfaitement en mesure de choisir un programme de simulation adéquat parmi les nombreux programmes disponibles sur le marché et d'y introduire les données précédentes. Si besoin est, on peut également se reporter à l'article de D. G. Hartzog et S.Sircar; "Adsorption", 1, 133-151 (1995), "Sensitivity of PSA Process Performance to Input Variables", décrivant un programme similaire.

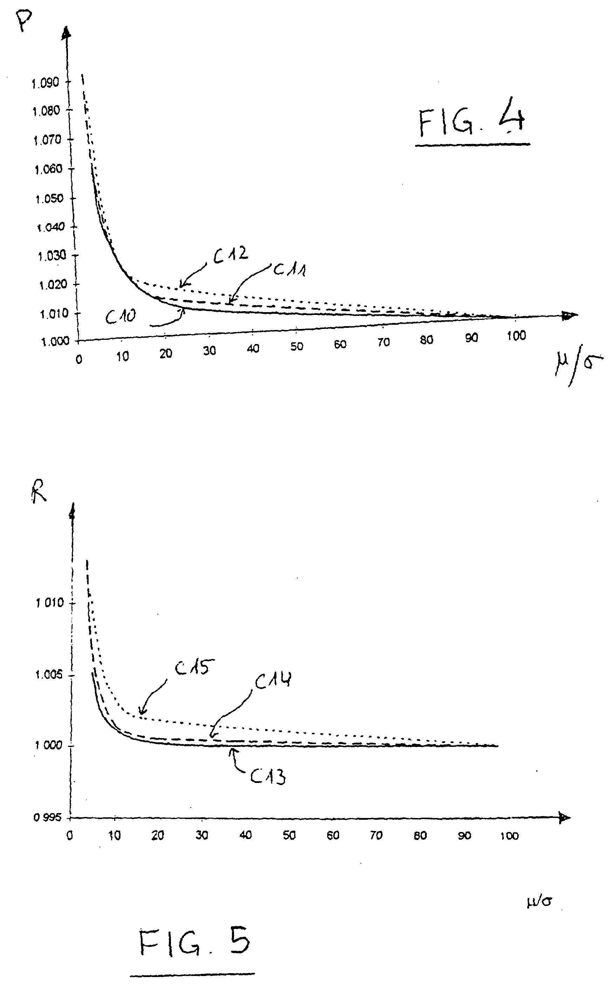

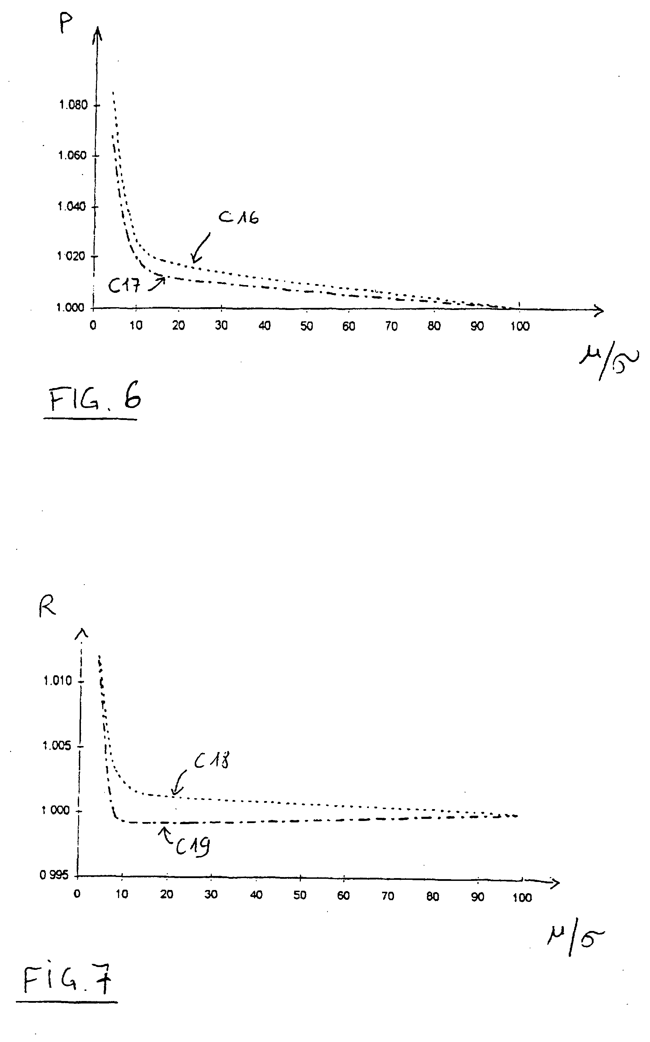

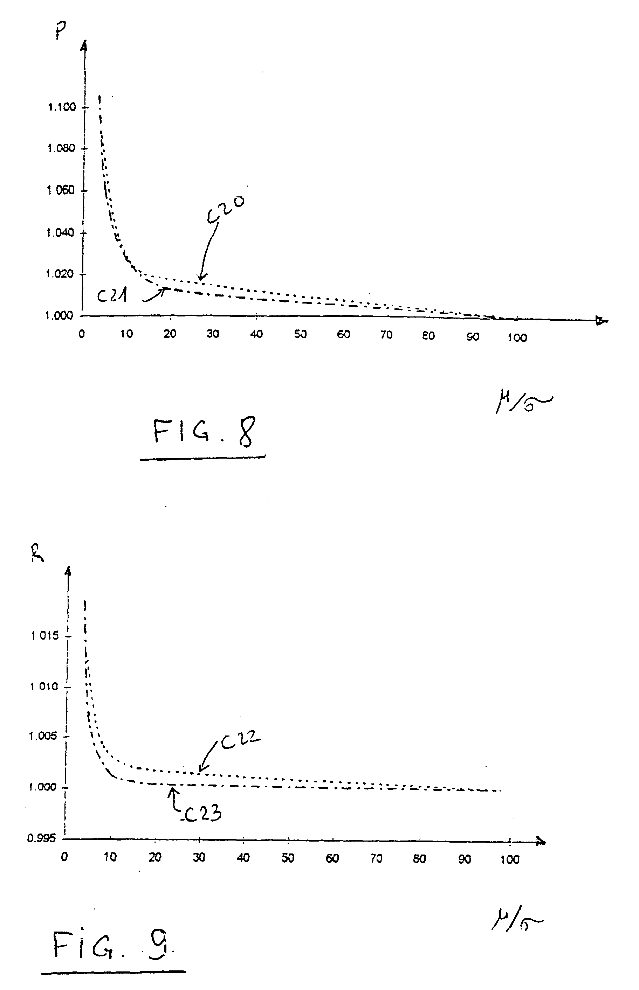

Sur les Figures 2, 4, 6 et 8, on a représenté, en ordonnées, l'indice de productivité (P) par cycle obtenu, par simulation, en fonction de différentes valeurs du rapport μ/σ (en abscisses) et ce, pour différentes valeurs d'épaisseur de lit et de temps de cycle indiquées dans le Tableau ci-après. La productivité correspond à la quantité d'oxygène produite par unité massique ou volumique d'adsorbant. On distingue la productivité horaire, où la quantité d'oxygène mesurée est la quantité d'oxygène produit toutes les heures, de la productivité par cycle, où la quantité d'oxygène mesurée est la quantité d'oxygène produite au cours d'un cycle PSA. L'indice de productivité est le rapport de la productivité calculée à une productivité de référence obtenue pour une valeur de μ/σ infinie.

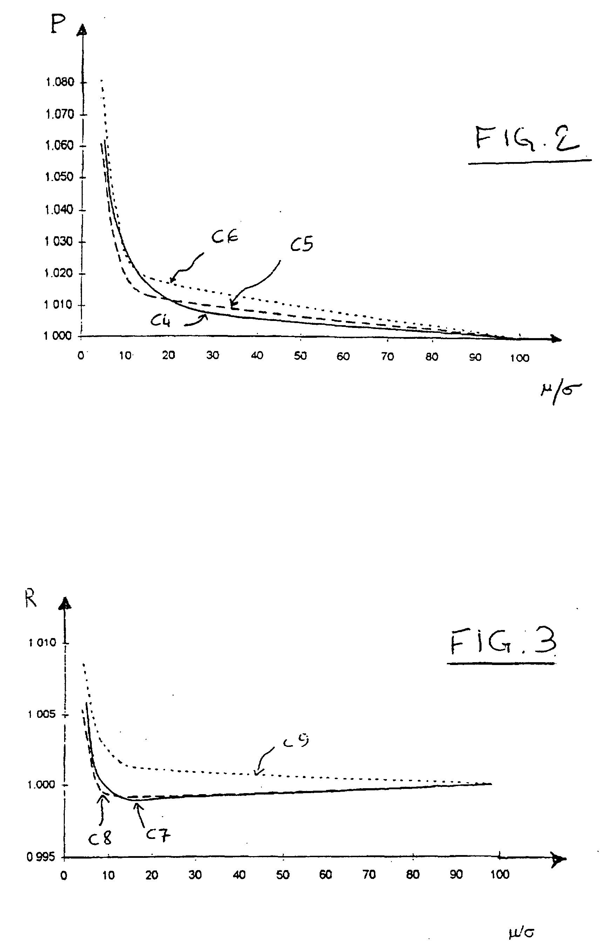

Sur les Figures 3, 5, 7 et 9, on a représenté, en ordonnées, l'indice de rendement (R) obtenu, par simulation, en fonction de différentes valeurs du rapport μ/σ (en abscisses) et ce, pour différentes valeurs d'épaisseur de lit et de temps de cycle indiquées dans le Tableau ci-après. Le rendement est le rapport de la quantité d'oxygène produite par le cycle PSA et pendant une période de temps donnée, à la quantité d'oxygène contenue dans le mélange initial introduit dans le PSA. L'indice de rendement est le rapport du rendement calculé à un rendement de référence obtenu pour une valeur de μ/σ infinie.

## Tableau

| Figures n° | Courbes n° | Cycle (sec) | Epaisseur du lit (m) | μ (mm) | Type de répartition | Pureté O2 (%) |
|---|---|---|---|---|---|---|
| | C4 et C7 | 3 x 30 | 1 | 1.2 | | |
| 2 et 3 | C5 et C8 | 3 x 30 | 0.5 | 0.8 | uniforme | 93 |
| | C6 et C9 | 3 x 15 | 0.5 | 0.8 | | |
| | C10 et C13 | 3 x 30 | 1 | 1.4 | | |
| 4 et 5 | C11 et C14 | 3 x 30 | 0.5 | 0.8 | uniforme | 90 |
| | C12 et C15 | 3 x 15 | 0.5 | 1.0 | | |
| 6 et 7 | C16 et C18 | 3 x 30 | 0.5 | 0.8 | gaussienne | 93 |
| | C17 et C19 | 3 x 15 | 0.5 | 0.8 | | |
| 8 et 9 | C20 et C22 | 3 x 30 | 0.5 | 0.8 | gaussienne | 90 |
| | C21 et C23 | 3 x 15 | 0.5 | 1 | | |

Il apparaît, au vu des courbes C4 à C23 que, lorsque l'on fait varier le rapport μ/σ, le rendement et la productivité du procédé PSA subissent des variations (détérioration et/ou amélioration) imperceptibles pour les valeurs de μ/σ comprises entre 15 et +∞. En revanche, on observe une augmentation surprenante des performances du procédé PSA, c'est-à-dire de la productivité et du rendement, pour des valeurs de μ/σ inférieures ou égales à 15 (voire à 10) et ce, jusqu'à une limite inférieure de 1.5 (voire de 3) en dessous de laquelle, il existe des billes de taille insuffisante pour être correctement retenues par les grilles des adsorbeurs.

De là, une sélection d'une granulométrie moyenne (μ) de particules d'adsorbant et d'une largeur de distribution granulométrique (σ) desdites particules, telles que le rapport (μ/σ) soit compris dans la plage 1.5 à 15, voire dans la plage optimale plus étroite 3 à 10, permet d'aboutir à un procédé PSA performant et ce, quelle que soit le type de distribution granulométrique choisie, en particulier uniforme ou gaussienne. A ce titre, il faut souligner que, bien que ces deux distributions soient de nature différente, celles-ci conduisent, de manière surprenante, à des résultats tout à fait comparables, ce qui permet une généralisation de la présente invention à tout type de distribution granulométrique

Ainsi, on obtient un procédé PSA ayant une zone d'adsorption aux performances nettement améliorées par rapport à celles des procédés connus. En d'autres termes, les inventeurs de la présente invention ont découvert, de manière surprenante, que la largeur de distribution granulométrique (σ) des particules d'adsorbant jouait un rôle primordial sur l'efficacité de la récupération d'oxygène à partir d'air ambiant.

## Revendications

1. Procédé de séparation d'un flux gazeux d'alimentation contenant au moins un premier composant et un second composant, par :

- adsorption préférentielle dudit premier composant, à une pression haute d'adsorption, sur au moins un lit de particules d'un matériau adsorbant de granulométrie moyenne inférieure à 2,5 mm et récupération d'un flux gazeux enrichi en ledit second composant,
- et désorption dudit premier composant à une pression basse de désorption,

**caractérisé en ce que** le rapport ($\mu/\sigma$) de la granulométrie moyenne ($\mu$) des particules d'adsorbant contenues dans ledit lit sur la largeur de. distribution granulométrique ($\sigma$) desdites particules est compris dans la plage 1.5 à 15.

2. Procédé selon la revendication 1, **caractérisé en ce que** le rapport ($\mu/\sigma$) est compris dans la plage 3 à 10.

3. Procédé selon l'une des revendications 1 ou 2, **caractérisé en. ce que** l'épaisseur du lit de particules est comprise entre 0.1 à 3 m et, de préférence, entre 0.3 et 1.2 m.

4. Procédé selon l'une des revendications 1 à 3, **caractérisé en ce que** les particules de matériau adsorbant sont des particules de zéolites échangées.

5. Procédé selon l'une des revendications 1 à 4, **caractérisé en ce que** la pression haute d'adsorption est comprise dans la gamme $10^5$ Pa à $10^6$ Pa.

6. Procédé selon l'une des revendications 1 à 5, **caractérisé en ce que** la pression de désorption est comprise dans la gamme $10^4$ Pa à $10^5$ Pa.

7. Procédé selon l'une des revendications 1 à 6, **caractérisé en ce que** les particules de zéolites contiennent des cations choisis dans le groupe formé par le calcium, le lithium, le zinc, le strontium, le magnésium, le cuivre, l'aluminium, le nickel, le cobalt, le manganèse, le chrome, le baryum, le sodium, le scandium, le gallium, le fer, l'indium, l'yttrium, les lanthanides et leurs mélanges.

8. Procédé selon l'une des revendications 1 à 7, **caractérisé en ce que** le flux gazeux d'alimentation est à une température comprise entre 15°C et 55°C.

9. Procédé selon l'une des revendications 1 à 8, **caractérisé en ce que** le premier composant est de l'azote et le second composant est de l'oxygène.

10. Procédé selon l'une des revendications 1 à 9, **caractérisé en ce que** le flux gazeux d'alimentation est de l'air.


**Claims**

1. Process for separating a gas feed stream containing at least a first component and a second component, by:

   - preferential adsorption of the said first component, at a high, adsorption pressure, on at least one bed of particles of an adsorbent material having a mean particle size of less than 2.5 mm and recovery of a gas stream enriched with the said second component and
   - desorption of the said first component at a low, desorption pressure,

   **characterized in that** the ratio ($\mu/\sigma$) of the mean particle size ($\mu$) of the adsorbent particles contained in the said bed to the width ($\sigma$) of the particle size distribution of the said particles lies within the 1.5 to 15 range.

2. Process according to Claim 1, **characterized in that** the ratio ($\mu/\sigma$) lies within the 3 to 10 range.

3. Process according to either of Claims 1 and 2, **characterized in that** the thickness of the bed of particles is between 0.1 and 3 m and preferably between 0.3 and 1.2 m.

4. Process according to one of Claims 1 to 3, **characterized in that** the particles of adsorbent material are particles of exchanged zeolites.

5. Process according to one of Claims 1 to 4, **characterized in that** the high, adsorption pressure lies within the $10^5$ Pa to $10^6$ Pa range.

**6.** Process according to one of Claims 1 to 5, **characterized in that** the desorption pressure lies within the $10^4$ Pa to $10^5$ Pa range.

**7.** Process according to one of Claims 1 to 6, **characterized in that** the zeolite particles contain cations chosen from the group formed by calcium, lithium, zinc, strontium, magnesium, copper, aluminium, nickel, cobalt, manganese, chromium, barium, sodium, scandium, gallium, iron, indium, yttrium, the lanthanides, and mixtures thereof.

**8.** Process according to one of Claims 1 to 7, **characterized in that** the gas feed stream is at a temperature between 15°C and 55°C.

**9.** Process according to one of Claims 1 to 8, **characterized in that** the first component is nitrogen and the second component is oxygen.

**10.** Process according to one of Claims 1 to 9, **characterized in that** the gas feed stream is air.

**Patentansprüche**

**1.** Verfahren zur Trennung eines Einsatzgasstroms, der mindestens eine erste Komponente und eine zweite Komponente enthält, durch:

- bevorzugte Adsorption der ersten Komponente bei einem hohen Adsorptionsdruck an mindestens einer Schüttung von Teilchen aus einem Adsorptionsmittel mit einer mittleren Teilchengröße von weniger als 2,5 mm und Rückgewinnung eines mit der zweiten Komponente angereicherten Gasstroms
- und Desorption der ersten Komponente bei einem niedrigen Desorptionsdruck,

**dadurch gekennzeichnet, daß** das Verhältnis ($\mu/\sigma$) der mittleren Teilchengröße ($\mu$) der in der Schüttung enthaltenen Adsorptionsmittelteilchen zur Breite der Teilchengrößenverteilung ($\sigma$) der Teilchen im Bereich von 1,5 bis 15 liegt.

**2.** Verfahren nach Anspruch 1, **dadurch gekennzeichnet, daß** das das Verhältnis ($\mu/\sigma$) im Bereich von 3 bis 10 liegt.

**3.** Verfahren nach Anspruch 1 oder 2, **dadurch gekennzeichnet, daß** die Dicke der Teilchenschüttung zwischen 0,1 und 3 m und vorzugsweise zwischen 0,3 und 1,2 m liegt.

**4.** Verfahren nach einem der Ansprüche 1 bis 3, **dadurch gekennzeichnet, daß** es sich bei den Adsorptionsmittelteilchen um Teilchen aus ausgetauschten Zeolithen handelt.

**5.** Verfahren nach einem der Ansprüche 1 bis 4, **dadurch gekennzeichnet, daß** der hohe Adsorptionsdruck im Bereich von $10^5$ Pa bis $10^6$ Pa liegt.

**6.** Verfahren nach einem der Ansprüche 1 is 5 **dadurch gekennzeichnet, daß** der niedrige Desorptionsdruck im Bereich von $10^4$ Pa bis $10^5$ Pa liegt.

**7.** Verfahren nach einem der Ansprüche 1 bis 6, **dadurch gekennzeichnet, daß** die Zeolithteilchen Kationen aus der Gruppe bestehend aus Calcium, Lithium, Zink, Strontium, Magnesium, Kupfer, Aluminium, Nickel, Cobalt, Mangan, Chrom, Barium, Natrium, Scandium, Gallium, Eisen, Indium, Yttrium, den Lanthaniden und Gemischen davon enthalten.

**8.** Verfahren nach einem der Ansprüche 1 bis 7, **dadurch gekennzeichnet, daß** der Einsatzgasstrom eine Temperatur zwischen 15°C und 55°C aufweist.

**9.** Verfahren nach einem der Ansprüche 1 bis 8, **dadurch gekennzeichnet, daß** es sich bei der ersten Komponente um Stickstoff und bei der zweiten Komponente um Sauerstoff handelt.

**10.** Verfahren nach einem der Ansprüche 1 bis 9, **dadurch gekennzeichnet, daß** es sich bei dem Einsatzgasstrom um Luft handelt.

FIGURE 1

FIG. 2

FIG. 3

FIG. 4

FIG. 5

FIG. 6

FIG. 7

FIG. 8

FIG. 9.